# EUROPÄISCHE PATENTANMELDUNG

(11) **EP 1 462 701 A1**
(43) Veröffentlichungstag der Anmeldung: **29.09.2004**
(21) Anmeldenummer: 03026965.8
(22) Anmeldetag: 25.11.2003
(51) Int. Cl.: F16L 11/127, F16L 9/12

(54) **Mehrschichtige, elektrisch leitfähige Leitung**

(30) Priorität: 24.03.2003 DE 10312942
(71) Anmelder: VERITAS AG, 63571 Gelnhausen (DE)
(72) Erfinder: Severengiz, Tevfik, Dr., 63571 Gelnhausen (DE); Jaborek, Joachim, 63831 Wiesen (DE)
(74) Vertreter: Grünecker, Kinkeldey, Stockmair & Schwanhäusser Anwaltssozietät

(57) **Zusammenfassung**

Mehrschichtige, elektrisch leitfähige Leitung (1) mit wenigstens einer Trägerschicht (3) und einer innerhalb der Trägerschicht (3) angeordneten Sperrschicht (4) mit wenigstens einem elektrisch leitfähigen Abschnitt (5), der sich zumindest abschnittsweise in Längsrichtung der Leitung (1) erstreckt. Um derartige Leitungen (1) einfacher herzustellen, bei gleichzeitig guter Sperrwirkung und guten elektrischen Eigenschaften, ist erfindungsgemäß vorgesehen, dass der elektrisch leitfähige Abschnitt (5) innerhalb der Sperrschicht (4) angeordnet ist.

## Beschreibung

Die vorliegende Erfindung bezieht sich auf eine mehrschichtige, elektrisch leitfähige Leitung mit wenigstens einer Trägerschicht und einer innerhalb der Trägerschicht angeordneten Sperrschicht mit wenigstens einem elektrisch leitfähigen Abschnitt, der sich zumindest abschnittsweise in Längsrichtung der Leitung erstreckt.

Eine derartige Leitung ist z. B. aus der DE 198 54 819 bekannt. Die dort beschriebenen Leitungen kommen in der Automobilindustrie als Kraftstoffleitungen zum Einsatz und werden häufig auch als sogenannte antistatische leitfähige Leitungen bezeichnet. Die Leitung ist mehrschichtig aufgebaut mit einer äußeren Trägerschicht aus Kunststoff und einer innerhalb der Trägerschicht liegenden Sperrschicht aus Fluor enthaltenden Stoffen. Als innerste Schicht ist eine elektrisch leitfähige Schicht aus einem Kunststoff vorgesehen, der Kohlenstoffpartikel enthält. Durch die Sperrschicht soll ein Hindurchdiffundieren von Gasen oder geförderten Kraftstoffs durch die Leitung verhindert werden. Durch die elektrische leitfähige Schicht soll die während des Förderns von Kraftstoffen entstandene elektrische Ladung abgeführt werden. Auf diese Weise soll ein Entzünden des Kraftstoffs durch elektrische Ladung verhindert werden. Es hat sich jedoch gezeigt, dass die mechanischen Eigenschaften nicht immer befriedigen können Insbesondere wird durch die elektrische leitfähige Innenschicht die Flexibilität und mechanische Stabilität der Leitungen herabgesetzt.

Aus der DE 101 17 753 ist zudem ein Schlauch mit leitfähigem Streifen bekannt, bei dem die Streifen an der Innenseite des Schlauches angeordnet und durch das umgebende Material elektrisch isoliert sind.

Die Aufgabe der Erfindung ist es daher, die bekannten antistatischen Leitungen zu verbessern und die Nachteile aus dem Stand der Technik so zu überwinden, dass die mechanischen Eigenschaften verbessert und die statische Elektrizität besser abgeführt werden kann.

Die Aufgabe wird erfindungsgemäß gelöst durch eine mehrschichtige, elektrisch leitfähige Leitung der eingangs genannten Art, bei der ein elektrisch leitfähiger Abschnitt innerhalb der Sperrschicht angeordnet ist und sich radial über die gesamte Wandstärke der Sperrschicht erstreckt.

Diese Lösung ist einfach und hat den Vorteil, dass anstelle einer Sperrschicht und einer dazu in radialer Richtung benachbarten zusätzlichen antistatischen leitfähigen Schicht nur mehr eine Schicht erforderlich ist, die sowohl die Sperrfunktion, wie auch die Funktion der elektrischen Leitfähigkeit übernehmen kann. Es hat sich gezeigt, dass bei dieser Gestaltung eine ausreichende Sperrwirkung bei gleichzeitig verbesserter Flexibilität der Leitung gewährleistet werden kann. Der elektrisch leitfähige Abschnitt gelangt direkt mit dem zu fördernden Fluid, z. B. einem Kraftstoff in Kontakt und kann die entstehende Ladung unmittelbar abführen. Zudem lässt sich auf diese Weise der elektrisch leitfähige Abschnitt in Umfangsrichtung der Sperrschicht volumenmäßig optimiert verwirklichen. Der elektrisch leitfähige Abschnitt kann dadurch bei vorgegebener Querschnittsfläche möglichst schmal durch Ausnutzung der maximalen radialen Erstreckung der Sperrschicht verwirklicht werden. Da der leitfähige Abschnitt unmittelbar an der Trägerschicht anliegen kann, ist es auch möglich elektrische Ladung radial über die Trägerschicht abzuführen, wenn diese ebenfalls leitfähig ist. Zudem kann die Sperrschicht mit dem antistatischen leitfähigen Abschnitt gleichzeitig hergestellt werden, so dass die Anzahl der Arbeitsschritte sich verringert und die Produktqualität verbessert werden kann.

In einer vorteilhaften Weiterbildung kann die Leitung als flexibler Schlauch ausgebildet sein. Gerade bei Schläuchen sind die verbesserten Flexibilitatseigenschaften von Vorteil.

Von Vorteil kann es dabei sein, wenn der elektrisch leitfähige Abschnitt im Wesentlichen streifenförmig ist.

Weiterhin kann es sich als günstig erweisen, wenn mehrere voneinander beabstandete elektrisch leitfähige Abschnitte in Umfangsrichtung der Sperrschicht vorgesehen sind. Dadurch können die leitfähigen Eigenschaften über den Umfang der Sperrschicht möglichst gleichmäßig verwirklicht werden.

Dabei kann es sich als vorteilhaft erweisen, wenn isolierende Sperrabschnitte der Sperrschicht ebenfalls im Wesentlichen streifenförmig ausgebildet ist, wobei abwechselnd elektrisch leitfähige Abschnitte und isolierende Sperrabschnitte vorgesehen sind.

Auch kann es sich als vorteilhaft erweisen, wenn die Sperrschicht mit dem elektrisch leitfähigen Abschnitt die Innenschicht bildet. Auf diese Weise kann die Sperrschicht mit dem elektrisch leitfähigen Abschnitt möglichst wirkungsvoll eingesetzt werden.

Von Vorteil kann es zudem sein, wenn die leitfähigen Abschnitte im Querschnitt gesehen segmentförmig sind. Durch diese Gestaltung lässt sich die Wirkung der leitfähigen Abschnitte optimieren.

Auch kann es sich als günstig erweisen, wenn der Volumenanteil der leitfähigen Abschnitte am Gesamtvolumen der Innenschicht kleiner als der Volumenanteil der isolierenden Sperrabschnitte ist.

Von Vorteil kann es dabei sein, wenn der Volumenanteil der leitfähigen Abschnitte weniger als 25% vorzugsweise 1 - 5% beträgt.

In einer vorteilhaften Weiterbildung der Erfindung kann der elektrisch leitfähige Abschnitt Kohlenstoff enthalten. So kann z. B. Ruß dem Grundmaterial des elektrisch leitfähigen Abschnitts zugegeben werden, um in kostengünstiger und wirkungsvoller Weise die elektrisch leitfähigen Eigenschaften zu erzeugen.

Um die Festigkeit der Sperrschicht mit dem elektrisch leitfähigen Abschnitt zu verbessern, kann das Grundmaterial des elektrisch leitfähigen Abschnitts gleich dem Grundmaterial der Sperrschicht sein. Dadurch kann eine durchgängige Sperrschicht mit leitfähigen, antistatischen, segmentförmigen Abschnitten verwirklicht werden.

In einer vorteilhaften Weiterbildung der Erfindung kann die Sperrschicht Fluorwerkstoffe enthalten. Mit solchen Fluorwerkstoffen enthaltenden Materialien lassen sich besonders günstige Sperrwirkungen gegen die Diffusion von Kohlenwasserstoffen erzielen. Als vorteilhaft kann sich dabei der Einsatz von Tetrafluor-Ethylen-Hexafluorpropylen Vinylfluorid (THV) oder alternativ Polyvinylidenfluorid (PVDF), Ethylen-Tetrafluorethylen-Copolymerisat (ETFE) oder Polytetrafluorethylen (PTFE) erweisen.

In einer vorteilhaften Weiterbildung der Erfindung enthält die Trägerschicht Polyamid Patentanmeldung 6, -11, -12, 6,6 und andere oder Polyolefin. Bevorzugte Polyolefine sind Polyethylen und Polypropylen. In diesem Fall kann die Trägerschicht auch antistatisch ausgerüstet werden.

Für die Trägerschicht können kraftstoffbeständige Thermoplastische Elastomere (TPE) oder Thermoplastische vernetzte Elastomere verwendet werden. So kann z. B. Acryl-Nitril-Butdien-Kautschuk (NBR) oder Ethylen-Acrylat-Kautschuk (AEM) oder Poly Chlorbutadien (CR) oder Clorierte-Polyäthylen (CM) oder aber Ethylenoxid-Epichlorhydrin-Kautschuk (ECO) verwendet werden. Auch ist denkbar, die Trägerschicht mit Polyvinyl-Chlorid (PVC) herzustellen. Mit den genannten Materialien lassen sich flexible Schläuche kostengünstig verwirklichen.

Die Trägerschicht kann in vorteilhafter Weise ebenfalls elektrisch leitfähig sein. Hierzu kann die Trägerschicht Kohlenstoff enthalten. Auf diese Weise kann die statische Elektrizität über den gesamten Querschnitt des Schlauches abgeführt werden.

Darüber hinaus ist erfindungsgemäß noch ein Verfahren zum Herstellen eines erfindungsgemäßen Rohrs beansprucht, bei dem die isolierende Sperrschicht mit dem elektrisch leitfähigen Abschnitt gleichzeitig extrudiert wird.

Gegenüber herkömmlichen Lösungen, bei denen zunächst eine elektrisch leitfähige Schicht und anschließend eine Sperrschicht und in einem Folgeschritt die Trägerschicht aufextrudiert wird, kann durch die erfindungsgemäße Lösung der Herstellungsprozess zeitlich erheblich verkürzt werden.

Die Erfindung wird nachfolgend anhand eines Ausführungsbeispiels näher erläutert.

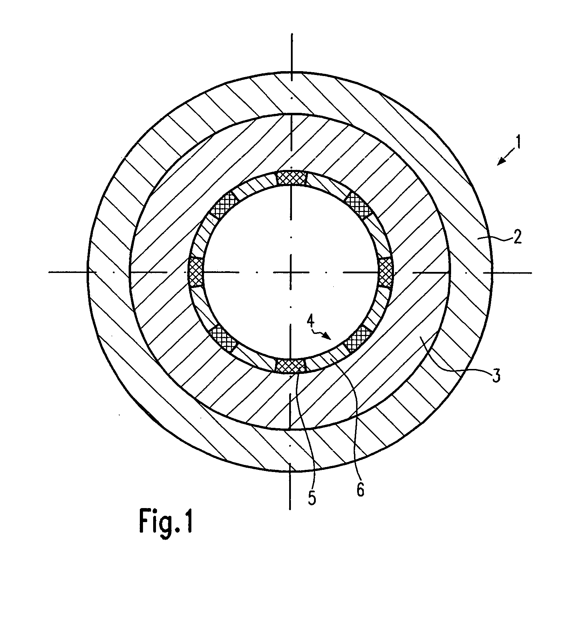

Die einzige Zeichnung zeigt einen Querschnitt durch eine erfindungsgemäße Leitung.

Die Leitung ist mit dem Bezugszeichen 1 gekennzeichnet. Es handelt sich dabei um eine flexible Leitung und sie kann daher auch als Schlauch oder Kunststoffrohr bezeichnet werden. Die Leitung 1 ist als Schlauch mehrschichtig aufgebaut mit einer Außenschicht 2, einer Trägerschicht 3 und einer Innenschicht 4, die gleichzeitig auch die Sperrschicht und den elektrisch leitfähigen Abschnitt bildet. Um dies zu verwirklichen ist die Innenschicht 4 streifenförmig aufgebaut mit elektrisch leitfähigen antistatischen Abschnitten oder Segmenten 5 und Sperrabschnitten 6. Die elektrisch leitfähigen segmentförmigen Abschnitte 5 wechseln sich mit isolierenden Sperrabschnitten 6 ab. Die radiale Erstreckung der elektrisch leitfähigen Abschnitte 5 ist dabei genauso groß wie die radiale Erstreckung der Sperrabschnitte und erstreckt sich somit über die gesamte Wandstärke der Sperrschicht, bzw. Innenschicht 4. Es ist auch eine gleiche Anzahl von elektrisch leitfähigen Abschnitten und Sperrabschnitten vorgesehen, wobei der Volumenanteil von elektrisch leitfähigen Abschnitten wesentlich geringer als der der Sperrabschnitte an der Innenschicht 4, bzw. Sperrschicht 4. Im vorliegenden Ausführungsbeispiel beträgt der Volumenanteil der antistatischen Abschnitte ca. 25% der Innenschicht, vorzugsweise 1 - 5%. Die Anzahl von Sperrabschnitten und leitfähigen Abschnitten ist bei den verschiedenen Ausführungsformen beispielhaft wiedergegeben. Es kann auch eine größere oder kleinere Anzahl von Sperrabschnitten und elektrisch leitfähigen Abschnitten vorgesehen sein. Aufgrund der streifenförmigen Gestaltung erstrecken sich die isolierenden Sperrabschnitte 6 und elektrisch leitfähige Abschnitte 5 in Längsrichtung des Rohrs, bzw. Schlauchs. Ein spiralförmiger Verlauf der Sperrabschnitte und elektrisch leitfähigen Abschnitten ist ebenfalls denkbar.

Im vorliegenden Ausführungsbeispiel kommen für die Außenschicht 2 und die Trägerschicht 3 Elastomere zum Einsatz, wie z. B. Ethylenoxid-Epichlorhydrin-Kautschuk (ECO) oder alternativ Acryl-Nitril-Butadien-Kautschuk (NBR) oder Ethylen-Acrylat-Kautschuk (AEM). Es ist auch denkbar, keine Außenschicht 2 vorzusehen und das Rohr nur zweischichtig aufzubauen. Ebenso ist denkbar, mehrere Schichten vorzusehen und z. B. zwischen der Außenschicht 2 und der Trägerschicht 3 eine Verstärkungsschicht aus einem Gewebe oder dergleichen vorzusehen. Die Innenschicht besteht aus einem einheitlichen Polymerisat, das Fluorpolymer, Polyamide, Polyethylene oder andere kraftstoffbeständige Polymere sind, wobei im Bereich der Sperrabschnitte das Polymer Fluorwerkstoffe und im Bereich der elektrisch leitfähigen Abschnitte Kohlenstoff neben Fluorwerkstoffen zusätzlich vorgesehen ist. Durch die Fluorwerkstoffe werden die Sperrwirkungen erzeugt, um ein Hindurchdiffundieren von Kohlenwasserstoffen durch die Leitung hindurch zu verhindern. Da die Fluorwerkstoffe über den gesamten Umfang der Innenschicht vorhanden sind, wird über den gesamt Umfang der Innenschicht eine Sperrwirkung erzeugt. Der Kohlenstoff kann z. B. in der Form von Ruß beigegeben, um dadurch die elektrisch leitfähigen Eigenschaften zu erzielen. Alternativ können auch Metallspäne, Metallpulver, Nanopartikel oder Kohlenstofffibrillen beigegeben werden.

Alternativ ist es auch denkbar, die elektrisch leitfähigen Abschnitte und die Sperrabschnitte jeweils aus unterschiedlichen Grundmaterialien herzustellen. Diese müssen jedoch in einer Weise gewählt werden, um ein Haften der elektrisch leitfähigen Abschnitte an den Sperrabschnitten sicherzustellen. Für die Sperrabschnitte eignet sich z. B. Polyvinylidenfluorid (PVDF) oder Terafluor-Ethylen-Hexafluorpropylen Vinylfluorid (THV) oder Ethylen-Tetrafluorethylen-Copolymerisat (ETFE) oder Polytetrafluorethylen (PTFE). Für die elektrisch leitfähigen Abschnitte eignen sich mit Ruß versetzte Polymere, Polyamide oder Polyolefine. Grundsätzlich empfiehlt es sich jedoch aus Gründen der Festigkeit für die elektrisch leitfähigen Abschnitte und die Sperrabschnitte dasselbe Grundmaterial zu verwenden. Zwar kann alternativ verschiedenes Grundmaterial verwendet werden, gleiches Grundmaterial hat sich jedoch als vorteilhafter erwiesen.

Zur Herstellung des erfindungsgemäßen Rohres kann zunächst die Innenschicht 4, bzw. Sperrschicht erzeugt werden, wobei die elektrisch leitfähigen Abschnitte und die Sperrabschnitte gleichzeitig extrudiert werden. Auf diese Weise kann in einem Arbeitsschritt eine Sperrschicht erzeugt werden, die gleichzeitig auch elektrisch leitfähige Eigenschaften aufweist.

Nachfolgend wird die Wirkungs- und Funktionsweise der Erfindung näher erläutert.

Die bevorzugte Ausführungsform der erfindungsgemäßen Leitung bzw. Schlauchs wird als Kraftstoffleitung verwendet. Zunehmende Umweltanforderungen verlangen die Diffusionsbeständigkeit gegen Kohlenwasserstoffe zu verbessern. Zudem müssen beim Fördern von Kraftstoffen entstehende elektrische Ladungen abgeführt werden. Durch das erfindungsgemäße Rohr bzw. der Schlauch ist es nunmehr möglich mit nur einer Sperrschicht beide Anforderungen zu erfüllen. Die elektrisch leitfähigen Abschnitte stehen direkt im Kontakt mit dem zu fördernden Kraftstoff, um dadurch unmittelbar entstehende elektrische Ladung abzuführen. Durch die Gestaltung der elektrisch leitenden Abschnitte über die gesamte Wandstärke der Sperrschicht, bzw. Innenschicht 4 liegen die elektrisch leitfähigen Abschnitte 5 darüber hinaus auch direkt an der sie umgebenden Trägerschicht 3 an. Die Materialien der Außenschicht 2 oder Trägerschicht 3 sind ebenfalls in einem Bereich von 10³-10⁷ Ω/cm (Durchgangswiderstand) elektrisch leitfähig. Der Oberflächenwiderstand der eine Deckschicht bildenden Außenschicht 2 liegt in einem Bereich von 10³ - 10⁷ Ω. Auf diese Weise kann entstehende elektnsche Ladung unmittelbar radial über die gesamte Wandstärke des Schlauchs abgeführt werden.

Die Fluorwerkstoffe aufweisenden Sperrabschnitte, wie auch die leitfähigen Abschnitte, verhindern zuverlässig eine Diffusion von Kohlenwasserstoffen. Aufgrund der gleichmäßigen Verteilung von elektrisch leitfähigen Abschnitten und Sperrabschnitten hat sich gezeigt, dass eine Diffusion von Kohlenwasserstoffen wirkungsvoll verhindert werden kann, bei gleichzeitig hervorragenden elektrischen Leiteigenschaften. Aufgrund der streifenförmigen Gestaltung der elektrisch leitfähigen Abschnitte und der Sperrabschnitte hat sich zudem gezeigt, dass die mechanische Stabilität und Flexibilität gegenüber herkömmlichen Schläuchen oder Rohren, bei denen die Innenschicht durch eine elektrisch leitfähige Innenschicht und eine dazu benachbarte Sperrschicht gebildet wird, verbessert werden. Auch haben sich erfindungsgemäße Schläuche als kälteflexibel und temperaturbeständig erwiesen und können in einem Bereich von -40°C bis 125°C betrieben werden.

## Patentansprüche

1. Mehrschichtige, elektrisch leitfähige Leitung mit wenigstens einer Trägerschicht (3) und einer innerhalb der Trägerschicht angeordneten Sperrschicht (4) und mit wenigstens einem elektrischen leitfähigen Abschnitt (5), der sich zumindest abschnittsweise in Längsrichtung der Leitung (1) erstreckt, **dadurch gekennzeichnet, dass** der elektrisch leitfähige Abschnitt (5) innerhalb der Sperrschicht angeordnet ist und sich radial über die gesamte Wandstärke der Sperrschicht erstreckt.

2. Mehrschichtige, elektrisch leitfähige Leitung nach Anspruch 1, **dadurch gekennzeichnet, dass** das Rohr (1) als flexibler Schlauch ausgebildet ist.

3. Mehrschichtige, elektrisch leitfähige Leitung nach Anspruch 1 oder 2, **dadurch gekennzeichnet, dass** der elektrische leitfähige Abschnitt im Wesentlichen streifenförmig ist.

4. Mehrschichtige, elektrisch leitfähige Leitung nach einem der vorangegangenen Ansprüche, **dadurch gekennzeichnet, dass** die leitfähigen Abschnitte im Querschnitt gesehen segmentförmig sind.

5. Mehrschichtige, elektrisch leitfähige Leitung nach einem der vorangegangen Ansprüche, **dadurch gekennzeichnet, dass** mehrere voneinander beabstandete elektrische leitfähige Abschnitte (6) in Umfangsrichtung der Sperrschicht (4) vorgesehen sind.

6. Mehrschichtige, elektrisch leitfähige Leitung nach einem der vorangegangen Ansprüche, **dadurch gekennzeichnet, dass** die Sperrschicht im Wesentlichen streifenförmig ausgebildet ist, wobei abwechselnd elektrisch leitfähige Abschnitte (6) und Sperrabschnitte (6) vorgesehen sind

7. Mehrschichtige, elektrisch leitfähige Leitung nach einem der vorangegangen Ansprüche, **dadurch gekennzeichnet, dass** die Sperrschicht mit dem elektrischen leitfähigen Abschnitt die Innenschicht bildet.

8. Mehrschichtige, elektrisch leitfähige Leitung nach einem der vorangegangen Ansprüche, **dadurch gekennzeichnet, dass** der Volumenanteil der leitfähigen Abschnitte am Gesamtvolumen der Innenschicht kleiner als der Volumenanteil der Sperrabschnitte ist.

9. Mehrschichtige, elektrisch leitfähige Leitung nach einem der vorangegangen Ansprüche, **dadurch gekennzeichnet, dass** der Volumenanteil der leitfähigen Abschnitte weniger als 25%, vorzugsweise 1 - 5% beträgt.

10. Mehrschichtige, elektrisch leitfähige Leitung nach einem der vorangegangen Ansprüche, **dadurch gekennzeichnet, dass** der elektrische leitfähige Abschnitt Kohlenstoff enthält.

11. Mehrschichtige, elektrisch leitfähige Leitung nach einem der vorangegangen Ansprüche, **dadurch gekennzeichnet, dass** der elektrisch leitfähige Abschnitt Metallspäne enthält.

12. Mehrschichtige, elektrisch leitfähige Leitung nach einem der vorangegangen Ansprüche, **dadurch gekennzeichnet, dass** das Grundmaterial des leitfähigen Abschnitts gleich dem Grundmaterial des Sperrabschnitts ist.

13. Mehrschichtige, elektrisch leitfähige Leitung nach einem der vorangegangen Ansprüche, **dadurch gekennzeichnet, dass** die Sperrschicht Fluorwerkstoffe enthält.

14. Mehrschichtige, elektrisch leitfähige Leitung nach einem der vorangegangen Ansprüche, **dadurch gekennzeichnet, dass** die Sperrschicht Tetrafluor-Ethylen-Hexafluorpropylen Vinylfluorid (THV) enthält.

15. Mehrschichtige, elektrisch leitfähige Leitung nach einem der vorangegangen Ansprüche, **dadurch gekennzeichnet, dass** die Sperrschicht Polyvinylidenfluorid (PVDF) enthält.

16. Mehrschichtige, elektrisch leitfähige Leitung nach einem der vorangegangen Ansprüche, **dadurch gekennzeichnet, dass** das Grundmaterial der Sperrschicht oder der elektrisch leitfähigen Abschnitte ein Polyamid oder Polyolefin enthält.

17. Mehrschichtige, elektrisch leitfähige Leitung nach einem der vorangegangen Ansprüche, **dadurch gekennzeichnet, dass** die Trägerschicht elektrisch leitfähig ist.

18. Mehrschichtige, elektrisch leitfähige Leitung nach einem der vorangegangen Ansprüche, **dadurch gekennzeichnet, dass** die Trägerschicht ein Polymer enthält.

19. Mehrschichtige, elektrisch leitfähige Leitung nach einem der vorangegangen Ansprüche, **dadurch gekennzeichnet, dass** die Trägerschicht Kohlenstoff enthält.

20. Mehrschichtige, elektrisch leitfähige Leitung nach einem der vorangegangen Ansprüche, **dadurch gekennzeichnet, dass** die Trägerschicht Polyvinyl-Chlorid (PVC) enthält.

21. Mehrschichtige, elektrisch leitfähige Leitung nach einem der vorangegangen Ansprüche, **dadurch gekennzeichnet, dass** die Trägerschicht ein thermoplastisches Elastomer (TPE) enthält.

22. Mehrschichtige, elektrisch leitfähige Leitung nach einem der vorangegangen Ansprüche, **dadurch gekennzeichnet, dass** das Elastomer ausgewählt ist aus Acryl-Nitril-Butadien-Kautschuk (NBR), Ethylen-Acrylat-Kautschuk (AEM), Poly-Z-Chlorbutadien (CR), Cloro-Polyethylen (CM) oder Ethylenoxid-Epichlorhydrin-Kautschuk (ECO).

23. Verfahren zum Herstellen eines mehrschichtigen, elektrisch leitfähigen Rohrs nach einem der vorangegangenen Ansprüche, **dadurch gekennzeichnet, dass** die Sperrschicht mit dem elektrisch leitfähigen Abschnitt gleichzeitig extrudiert wird.
